(19)

**Europäisches Patentamt**
**European Patent Office**
**Office européen des brevets**

(11)  **EP 2 645 735 B1**

(12) **EUROPEAN PATENT SPECIFICATION**

(45) Date of publication and mention
of the grant of the patent:
**23.04.2014   Bulletin 2014/17**

(51) Int Cl.:
*H04Q 11/00* (2006.01)      *H04J 14/08* (2006.01)

(21) Application number: **12305370.4**

(22) Date of filing: **29.03.2012**

(54) **Method and apparatus for optimized scheduling in a multi-process environment**

Verfahren und Vorrichtung zur optimierten Zeitplanung in einer Mehrprozess-Umgebung

Procédé et appareil pour une planification optimisée dans un environnement multitraitement

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.10.2013   Bulletin 2013/40**

(73) Proprietors:
• **Mitsubishi Electric R&D Centre Europe B.V.
1119 NS  Schiphol Rijk Amsterdam (NL)**
Designated Contracting States:
**FR**
• **Mitsubishi Electric Corporation
Chiyoda-ku
Tokyo 100-8310 (JP)**
Designated Contracting States:
**AL AT BE BG CH CY CZ DE DK EE ES FI GB GR
HR HU IE IS IT LI LT LU LV MC MK MT NL NO PL
PT RO RS SE SI SK SM TR**

(72) Inventor: **Rollet, Romain
35590 L'Hermitage (FR)**

(74) Representative: **Cabinet Plasseraud
52, rue de la Victoire
75440 Paris Cedex 09 (FR)**

(56) References cited:
**EP-A1- 1 796 313**

• **ZHENG J ET AL: "A survey of dynamic bandwidth
allocation algorithms for Ethernet Passive
Optical Networks", OPTICAL SWITCHING AND
NETWORKING, ELSEVIER, NL, vol. 6, no. 3, 1 July
2009 (2009-07-01), pages 151-162, XP026348825,
ISSN: 1573-4277 [retrieved on 2009-03-31]**

**Description**

The present invention generally relates to access networks and more precisely to Passive Optical Networks (PON) for point to multi-point communications between an optical line terminal and a plurality of optical network units.

A PON is a single, shared optical fiber that uses inexpensive optical splitters to divide the single fiber from a Central Office (CO) into separate strands feeding individual subscribers. In such networks, information is carried by laser bursts. PONs are called 'passive' because there are no active electronics within the access network, except at subscriber endpoints and at the CO. The single fiber is divided by a passive splitter.

Ethernet Passive Optical Network (EPON) is based on the Ethernet standard (IEEE 802.3), unlike other PON technologies, which are based on the Asynchronous Transfer Mode (ATM) standard. EPON can utilize the economies-of-scale of Ethernet and provides simple and easy-to-manage connectivity to Ethernet-based IP (Internet Protocol) equipment, both at the subscriber endpoints and at the CO.

In such networks, information is exchanged between layers on a per-packet basis. Each packet received in a given layer is encoded with a set of encoding parameters specific to this layer. These parameters should be given through network administration means. A Data Link layer is tasked with sharing the physical resource between the subscriber endpoints and the CO. The Data Link layer is composed of two sub-layers, namely the Logical Link (LL) layer and the Medium Access Control (MAC) layer. A Physical layer translates logical communications requests from the Data Link layer into hardware-specific operations to affect transmission or reception of electronic signals.

The IEEE 802.3ah EPON specification, which is also called Gigabit EPON (GEPON), defines Multi-Point Control Protocol (MPCP), Point-to-Point Emulation (P2PE) and Physical layer for 1Gigabit EPON. The IEEE 802.3av specification defines extensions, mainly concerning the Physical layer, for 10Gigabit EPON. Amongst others, the Standard for Service Interoperability in Ethernet Passive Optical Networks (SIEPON) group (also referenced as P1904.1) describes system-level requirements needed to ensure service-level, multi-vendor interoperability of EPON equipment. These specifications complement the existing IEEE Standard 802.3 and IEEE Standard 802.1, which ensure the interoperability at the Physical layer and the Data Link layer.

An EPON network usually includes an Optical Line Terminal (OLT), which can be included in the CO, and one or more Optical Network Unit (ONU), which can be in charge of one or more subscribers of the EPON. The number of ONU managed by each OLT is typically between four and sixty-four in current deployments, but can be extended up to 1024 in future deployments.

To control a Point-to-Multi-Point (P2MP) fiber network, EPON uses the MPCP. MPCP performs bandwidth assignment, bandwidth polling, auto-discovery and ranging. MPCP is implemented in the MAC layer, and introduces two types of 64-byte Ethernet control messages; GATE and REPORT messages are used to assign and request bandwidth and REGISTER message is used to control the auto-discovery process.

The MAC layer is tasked with transmission arbitration, which allows a given ONU to enable transmission from its peer for a predetermined interval of time (also called transmission window or timeslot). Start and length of the transmission windows dedicated to each ONU are defined by a Dynamic Bandwidth Allocation (DBA) scheduler comprised in the OLT.

The GATE message is sent from the OLT to a given ONU and is used to assign one or several transmission window to that ONU. Conversely, the REPORT message is a feedback mechanism used by an ONU to indicate its buffer occupancy (meaning the length of a queue of waiting data packets to be sent by the ONU to the OLT), so that the DBA scheduler can define transmission windows that are adapted to the buffer occupancies of the ONUs.

Start and length of transmission windows (i.e. amount of resources allocated) as well as queue lengths in REPORT messages are expressed in Time Quantum (TQ) defined to be a 16ns (nanosecond) time interval for example (i.e. the time required to transmit 2 bytes at a 1Gigabit per second speed).

For compliancy with the IEEE 802 architecture, devices attached to a PON implement a Logical Topology Emulation (LTE) function that may emulate either a shared medium or a point-to-point medium. In this later scheme, the objective is to achieve the same physical connectivity as in a switched Local Area Network (LAN), where an active splitter is used between the ONUs and the OLT. The OLT (also called legacy OLT) can have a number N of MAC ports (or interfaces), one for each ONU. Each port is identified using a Logical Link Identifier (LLID) that is assigned to each ONU during a registration procedure.

In the downstream direction, meaning from the OLT to the ONUs, Ethernet packets sent by the OLT pass through a 1*N passive splitter and reach each ONU. Each Ethernet packet comprises a frame preamble that stores the LLID of the port to which the packet is intended. Such a functioning is similar to a shared medium network and as Ethernet is perfectly compatible with EPON architecture, as Ethernet is broadcasting by nature. Thus, Ethernet packets are broadcasted by the OLT and selectively extracted by the ONUs by using the LLID that is inserted in the Ethernet frame preamble. Downstream processing in the OLT is very simple since it consists mainly of tagging incoming packets with the right LLID and forwarding them to the corresponding Logical Link.

In the upstream direction, the ONU is authorized to enable transmission only during transmission window indicated in the dedicated GATE message. This mechanism avoids data collisions and fairly shares the channel capacity among ONUs. Upstream Ethernet frame are tagged with the LLID allocated to the ONU in the Ethernet frame preamble. This EPON multiplexing scheme introduces an upstream overhead that can become important when the number of LLIDs increases. Indeed, EPON upstream overhead is mainly due to control message overhead and guard band overhead. Main contribution of control message overhead is REPORT messages that are sent by the ONUs to indicate their buffer occupancy. Guard band is a time that is left blank between two upstream bursts in order to switch the laser on/off and perform required calibrations. Other factors that contribute to overhead (such as discovery overhead and frame delineation for example) can be considered as negligible.

A prior art method of dynamic bandwidth allocation in an EPON is disclosed in EP 1796313.

Table 1, below, summarises upstream overhead for different numbers of ONUs in a 1Gbit EPON with a 1ms DBA cycle, each ONU having an opportunity to send data to the OLT in each cycle.

Table 1

| Number of ONUs | Control message overhead (%) | Guard band overhead (%) | Total overhead (%) | Remaining bytes for user data |
|---|---|---|---|---|
| 16 | 1 | 2.3 | 3.3 | 7548 |
| 32 | 2.12 | 4.6 | 6.75 | 3642 |
| 64 | 4.3 | 9.2 | 13.5 | 1689 |
| 128 | 8.6 | 18.4 | 27 | 713 |
| 256 | 17.2 | 36.8 | 54 | 224 |

Referring to the results contained in Table 1, it is not reasonable to manage more than 32 ONUs per DBA cycle. Indeed, beyond 32 ONUs per DBA cycle, the overhead exceeds 10% and the transmission window allows transmitting only one 1500-bytes frame since its length expressed in bytes is lower than 2000 bytes.

In order to solve this problem, a method of limiting the number of upstream bursts per DBA cycle (1ms in general) by reducing the number of Logical Links (LLs) scheduled in each DBA cycle was proposed in European Patent Application Number EP11305131, filed on 9 February 2011, which method is outlined below. Without limiting the total number of LLs supported in the EPON, the method consists in a dynamic assignment of LL transmission opportunity instead of the legacy static assignment, as proposed in, for example, Ethernet Passive Optical Networks, G. Krammer, 2005, ISBN 0-07-144562-5.

Such a solution leads to a reduction in the overhead but also increases the upstream transmission time because ONUs can wait several cycles before having a transmission opportunity. This scheduling algorithm is based on a Self-Clocked Fair Queuing (SCFQ) algorithm that is modified to support burst number limitation.

Several technical problems exist in relation to the efficient implementation of the abovementioned method. These problems are compounded by the reliance of networking equipment on processors whose resources are shared among several processes.

The present invention provides a solution to these problems by providing a method of allocating transmission timeslots in a packet-based network in which time is divided into scheduling cycles and each scheduling cycle is divided into a plurality of timeslots, the network comprising a plurality of logical links being managed by a terminal, the terminal associating to each logical link a number of granted timeslots representing the resources that the logical link is allowed to use to transmit packets in the next scheduling cycle, a number of required timeslots representing the resources that the logical link requires to transmit unscheduled packets, and a theoretical transmission time , wherein

active logical links have at least one required timeslot and inactive logical links have no required timeslots,

scheduled logical links have at least one granted timeslot and unscheduled logical links having no granted timeslots, and the method makes use of a first binary tree and a second binary tree of predetermined maximum sizes, the first binary tree comprising leaves representing unscheduled active logical links and the second binary tree comprising leaves representing scheduled active logical links with non null required timeslots ($Req_{TQ,i}$),

the method comprises the steps of:

upon receipt of a REPORT message relating to a logical link:

if the logical link is inactive, updating the theoretical transmission time of the logical link and generating a new leaf associated with the logical link, adding the new leaf to the first binary tree if the logical link is not scheduled or if the second binary tree is full, adding the new leaf to the second binary tree if the logical link is scheduled and the second binary tree is not full;
updating the required timeslot value for the logical link; and
sorting the first and second binary trees according to the values of the theoretical transmission time associated with each represented logical link; and for each scheduling cycle:

initializing all granted timeslot values to zero;
if the second binary tree is not empty and the first binary tree is empty, or if the second binary tree is not empty and the theoretical transmission time of the root leaf of the second binary tree is smaller than the theoretical transmission time of the root leaf of the first binary tree, granting a number of timeslots in the next scheduling cycle to the logical link associated with the root leaf of the second binary tree and updating the theoretical transmission time, the granted timeslot value and the required timeslot value of the logical link associated with the root leaf of the second binary tree accordingly;
if the second binary tree is empty and the first binary tree is not empty, granting a number of timeslots in the next scheduling cycle to the logical link associated with the root leaf of the first binary tree and updating the theoretical transmission time, the granted timeslot value and the required timeslot value of the logical link associated with the root leaf of the first binary tree, before removing the root leaf of the first binary tree and adding it to the second binary tree if the associated logical link is still active;
sorting the first and second binary trees according to the values of the theoretical transmission time associated with each represented logical link;
repeating the steps of granting, updating and sorting until all the timeslots in the next scheduling cycle have been granted or there are no more active logical links; and
transferring any leaves remaining in the second binary tree to the first binary tree.

Preferably,
if the required timeslot value is superior to a fixed maximum value, the step of granting a number of timeslots comprises incrementing the current granted timeslot value by the fixed maximum value, the step of updating the theoretical transmission time comprises incrementing the theoretical transmission time by a value equivalent to the product of the fixed maximum value and the inverse of a weight associated with a logical link, and the step of updating the required timeslot value comprises decrementing the required timeslot value by the fixed maximum value;
if the required timeslot value is not superior to a fixed maximum value, the step of granting a number of timeslots comprises incrementing the current granted timeslot value by the required timeslot value, the step of updating the theoretical transmission time comprises incrementing the theoretical transmission time by a value equivalent to the product of the required timeslot value and the inverse of a weight associated with a logical link and the step of updating the required timeslot value comprises setting the required timeslot value to zero.

Preferably, an independently fixed maximum value is associated with each logical link.

Preferably, the step of granting a number of timeslots in the next scheduling cycle to the logical link associated with the root leaf of the second binary tree is only performed if the number of different logical links scheduled in the next cycle is inferior to a targeted maximum number of different logical links in a given cycle, and prior to the step of sorting the first and second binary trees, the method further comprises the step of:

incrementing the number of different logical links scheduled in the next cycle by 1 if the logical link is unscheduled.

Preferably, if the second binary tree is empty and the number of different logical links scheduled in the next cycle reaches the targeted maximum number of different logical links, the targeted maximum number of different logical links is incremented by a value equal to a predetermined initial maximum number of different logical links in a given cycle multiplied by the proportion of the number of remaining unscheduled timeslots in the next scheduling round to the total number of timeslots in the next scheduling round.

Preferably, upon receipt of the REPORT message, the step of updating the theoretical transmission time of the inactive logical link further comprises:

setting the theoretical transmission time to the largest value between the value of the current theoretical transmission time of the logical link and the smallest theoretical transmission time of any active logical link, if other active logical links exist; and
setting the theoretical transmission time to the largest value between the value of the current theoretical transmission time of the logical link and the most recent transmission time of any logical link, if no other active logical links exist.

In one embodiment, each repetition of the steps of granting, updating and sorting is separated by an interval during a scheduling cycle.

Preferably, the interval between each repetition is equal to the time required to transmit the number of timeslots which has been added to the granted timeslot value during the preceding step of updating the granted timeslot value.

In another embodiment, the repetitions of the steps of granting, updating and sorting are performed without interruption at the end of the scheduling cycle.

Preferably, each logical link comprises a memory context which includes the associated logical link ID, the associated required timeslot value, the associated granted timeslot value and the associated theoretical transmission time value.

Preferably, the theoretical transmission time ($TTT_i$) is encoded in the most significant bits of the leaves of the first and second binary trees.

Preferably, the step of sorting the first and second binary tree is performed using signed comparison of theoretical transmission time values.

Preferably, the method further comprises the step of:

periodically setting the theoretical transmission time of all inactive logical links to the theoretical transmission time value of the active logical link with the minimum theoretical transmission time value.

The present invention also provides an Ethernet Passive Optical Network (EPON) Optical Line Terminal (OLT) configured to execute the above method.

The present invention also provides a computer program product for a data-processing device, the computer program product comprising a set of instructions which, when loaded into the data-processing device, causes the device to perform the steps of the above method.

As will be appreciated by the skilled reader, the present invention provides several advantages over the prior art. For example, the present invention provides a method to efficiently implement an advanced scheduling algorithm over a processor whose resources are shared among several processes. In a first aspect of the invention, the scheduling process is performed in real-time since the scheduling of each cycle must be terminated before the cycle begins on the upstream link. For that, each operation is bounded in time and is performed on the fly. A well adapted memory structure based on two binary trees is used to efficiently perform the required operations. This structure is advantageous when used with embedded platforms (i.e. because of reduced memory usage).

In a second aspect of the invention, two different embodiments are proposed to enable execution of the scheduling process itself. In a first one, the scheduling process can be executed as a background task that can be interrupted by other tasks. In a second embodiment, the scheduling process is entirely executed just before the end of the cycle. In that case, it is not interruptible by other processes.

In a multi-process environment, processor resources dedicated to the scheduling process may be variable. Thus, in a third aspect of the invention, the proposed method is able to adapt itself to variations in resource availability, without impacting the total bandwidth available for upstream Logical Links, or the quality of service.

The present invention can be implemented in any OLT and does not require any modification to the existing IEEE standards. It helps to improve the QoS experienced by users on the upstream link by allowing coexistence of services with different QoS constraints. Its ability to dynamically adapt to available CPU resources is particularly advantageous in order to reduce the cost of devices. Indeed, it can be implemented on hardware shared with other tasks (control, management) instead of needing to be implemented on dedicated hardware. For this reason, it is particularly well adapted to very high speed networks, such as the 10G-EPON standard.

Other advantages and benefits of the present invention will become apparent from a consideration of the following description and accompanying drawings, in which:

FIGURE 1 is a block diagram representing a system which can be used in accordance with one embodiment of the present invention;

FIGURE 2 is a flowchart representing a queue update method in accordance with one embodiment of the present invention;

FIGURE 3 is a flowchart representing a queue service subroutine in accordance with one embodiment of the present invention;

FIGURE 4 is a flowchart representing a queue service method in accordance with one embodiment of the present invention;

FIGURE 5 is a diagram showing the results of a number of queue service rounds being executed on the system of Figure 1;

FIGURES 6 and 7 are illustrations representing the comparative results of a $TTT_i$ maintenance algorithm in accordance with one embodiment of the present invention; and

FIGURES 8 and 9 are diagrams showing the scheduling runtimes in accordance with two different embodiments of the present invention.

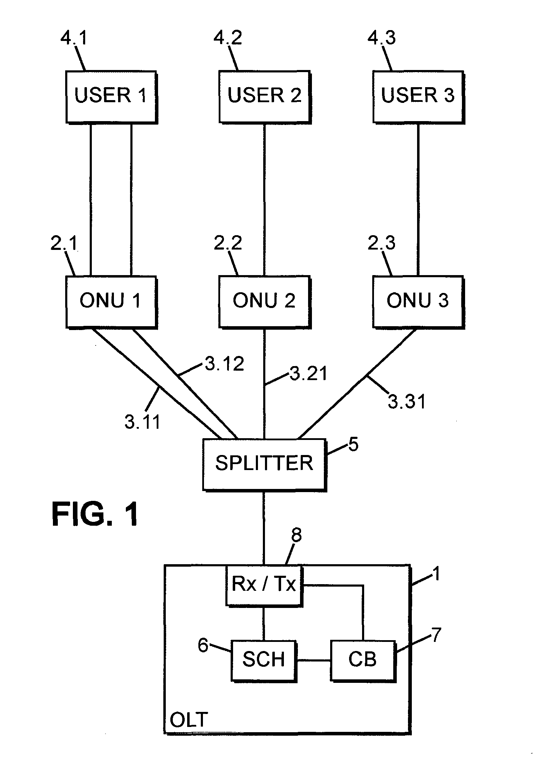

Figure 1 is a functional block diagram representing a system used in accordance with one embodiment of the present invention. The system comprises an OLT 1 adapted to implement the method according to the invention, the OLT 1 being connected to a plurality of ONUs 2.1, 2.2 and 2.3, each ONU being associated to a respective user 4.1, 4.2 and 4.3. As will be appreciated, an ONU can be in charge of the service of a plurality of users.

The OLT 1 is connected to the ONUs 2.1, 2.2 and 2.3 via an EPON comprising a passive splitter 5 to divide the optical fibre from the OLT 1 into a plurality of optical fibres, each optical fibre from the plurality being associated to a logical link 3.11, 3.12, 3.21 and 3.31. For example, each logical link can be associated to a given service. In this embodiment, ONU 2.1 manages both logical links 3.11 and 3.12, ONU 2.2 manages logical link 3.21 and ONU 2.3 manages logical link 3.31. ONUs are adapted to transmit data packets via the logical links, in timeslots that are defined by the OLT 1 via GATE messages according to the method described below and can send REPORT messages to the OLT 1 during their transmission timeslots.

To this end, the OLT 1 comprises a scheduler 6, a cycle builder 7 and a network interface 8. While receiving REPORT messages from OLT, the scheduler 6 and the cycle builder 7 are adapted to perform the previously described algorithms in order to build cycles in which timeslots are allocated in a fair way to the ONUs 2.1, 2.2 and 2.3 for transmission of data packets in the different logical links 3.11, 3.12, 3.21 and 3.31. The interface 8 is adapted to build GATE messages, to include an identifier of a logical link in the head of the GATE message, and to receive REPORT messages from the ONUs.

A solution to reduce the overhead due to REPORT messages and guard band is to reduce the number of logical links $LL_i$ scheduled or served in each DBA cycle. Without limiting the total number of logical links $LL_i$ supported in the EPON, the method consists in a dynamic assignment of logical link transmission opportunity (or allocation of timeslots in a given DBA cycle) instead of the prior art static assignment methods. Such a solution leads to an overall reduction in overhead.

To avoid obtaining an unfair queuing scheme, because this solution increases the upstream transmission time, given that ONUs shall wait several cycles before having timeslots allocated to them, the invention introduces for each logical link $LL_i$ a next time emission value $TTT_i$ that guarantees fairness among the different logical links $LL_i$.

The operation of the present invention relies on three basic memory structures, a first (or primary) binary tree, a second (or secondary) binary tree and a Logical Link context (LLID context). Binary trees are data structures used for fast $TTT_i$ ordering, and having a plurality of leaves (or nodes), wherein each "parent" leaf is connected to no more than two "child" leaves. The "root" leaf is a parent leaf that is not a child leaf. One of the main advantages of using the above combination of structures is that it allows a wide variety of fast computational functions, without requiring a large amount of cache memory.

Besides the memory required by the binary trees, a LLID context is required for each managed LLID. The LLID context is a section of memory containing a number of fields. Each LLID context contains the number of required TQs, namely the $Req_{TQ,i}$ (i.e. which can be set upon reception of the REPORT message), the number of TQs currently allocated to the $LL_i$ for the next DBA cycle, namely $Gr_{TQ,i}$, the current value of $TTT_i$ for the $LL_i$, and the time interval $T_i$ derived from the assigned weight Wi (i.e. $1/W_i$). $W_i$ reflects a minimum bit rate $b_i$ granted to logical link $LL_i$ and the time interval $T_i$ is used to increment $TTT_i$. It shall be noticed that $W_i$ (and thus $T_i$) are statically set by the administrator at the Logical Link registration. Thus, each managed $LL_i$ will comprise an LLID memory context which comprises at least the above field. In other embodiments, other fields may also be added.

Each leaf of the first binary tree represents an active LLID (i.e. a backlogged LL) and its associated next $TTT_i$. As will be appreciated, the basic operations on the first binary tree are tree initialisation, get root leaf (i.e. the leaf with the lowest $TTT_i$), remove the root leaf from the tree (which is followed by a reordering of the tree), insert a new leaf into the tree (which is also followed by a reordering of the tree), substitute a leaf by another (which will advantageously be used for $TTT_i$ updating, and which will also be followed by a reordering of the tree). The execution of the above operations on a binary tree will be clearly understood by the skilled reader.

In accordance with the presently described embodiment, each leaf of the first tree is represented by a 32-bits unsigned integer, in which the 10 least significant bits encode the LLID (thereby supporting 1024 LLIDs) while the 22 remaining bits encode the $TTT_i$ of the LLID. As a result of this coding scheme, the binary tree algorithms can operate directly on the leaf without needing to mask parts of it. Also, when two LLs have identical $TTT_i$, the algorithm will favour the LL with a lower LLID. As will be appreciated, other schemes of encoding leaves can be used.

Every time a REPORT message is received, the present invention will update the values of $TTT_i$ and $Req_{TQ,i}$ in both the LLID context and the first binary tree, and will reorder the tree accordingly.

In order to limit the number of LLID scheduled in a given DBA cycle, a second binary tree is required to store the LLID currently scheduled. The memory composition of each leaf of the second binary tree is similar to that the first binary tree as described above. The permissible size of the second binary tree is equal to the maximum targeted number of LLID scheduled in one DBA frame.

The scheduling process is mainly divided in two steps that are completely independent and asynchronous. The first step is called "queue update" and occurs upon REPORT message arrival and is in charge of updating the state of the upstream LLID queue in the OLT, while the second one called "queue service" is responsible of determining the composition of the next cycle (i.e. determining for each selected LLID the volume of granted resource).

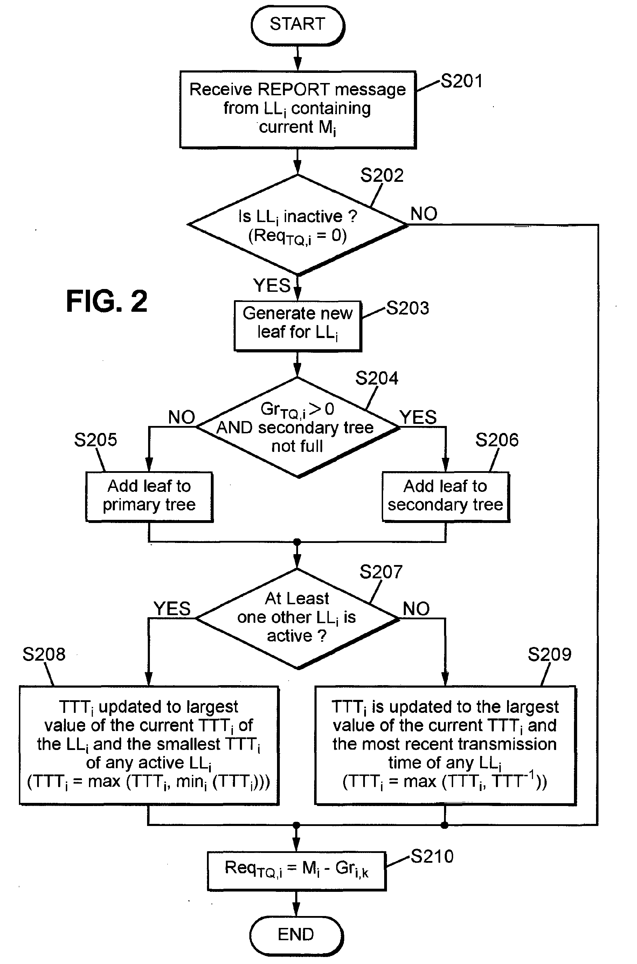

Figure 2 represents a flowchart of the queue update steps of a method according to one embodiment of the invention.

At step S201, if a REPORT message is received by the OLT from one of the ONUs managed by the OLT, the REPORT message being relative to a logical link $LL_i$, then the following algorithm is performed by the scheduler. The REPORT message can include an updated queue length, that can correspond to a number $M_i$ of TQs that are required for a transmission of data packets on the logical link $LL_i$. The OLT stores an image of each queue corresponding to data packets to be sent in a given logical link $LL_i$. The image queue length is noted $Req_{TQ,i}$ and is expressed in TQs.

The scheduler then performs the following operations:

$$\textbf{If } \text{the logical link } LL_i \text{ is inactive (i.e. } Req_{TQ,i} = 0)$$

$$\qquad \textbf{If } \text{at least one other LLi is active}$$

$$\qquad\qquad TTT_i = max(TTT_i, min_i(TTT_i)) \qquad /TTT_i \text{ is updated to the largest value}$$

$$\qquad\qquad\qquad\qquad \text{of the current } TTT_i \text{ of the } LL_i \text{ and the}$$

$$\qquad\qquad\qquad\qquad \text{smallest } TTT_i \text{ of any active } LL_i/$$

$$\qquad \textbf{Else}$$

$$\qquad\qquad TTT_i = max(TTT_i, TTT^{-1}) \qquad /TTT_i \text{ is updated to the largest value of}$$

$$\qquad\qquad\qquad\qquad \text{the current } TTT_i \text{ and the most recent}$$

$$\qquad\qquad\qquad\qquad \text{transmission time of any } LL_i/$$

$$\qquad \textbf{Endif}$$

$$\textbf{Endif}$$

$$Req_{TQ,i} = M_i - Gr_{TQ,i}$$

where $TTT^{-1}$ is the time at which the most recent data packet has been sent by one of the logical links in the EPON; $M_i$ is the number of TQs that the $LL_i$ are requesting in the REPORT message; and $Gr_{TQ,i}$ corresponds to the number of TQs granted during the current cycle k to logical link $LL_i$ for transmission of data packets during the next cycle k+1. At the beginning of cycle k+1, $Gr_{TQ,i}$ is initialized to zero.

The queue update operation can be seen in Figure 2. In step S201, a REPORT message is received containing $M_i$, which is the number of TQs that the $LL_i$ is requesting in the REPORT message. In step S202, If the $LL_i$ is active (i.e. $Req_{TQ,i} \neq 0$), then the step S206 is performed and $Req_{TQ,i}$ is updated by subtracting $Gr_{TQ,i}$ (the number of TQs granted during the current cycle k to logical link $LL_i$ for transmission of data packets during the next cycle k+1) from the value of $M_i$.

If, on the other hand, the $LL_i$ is inactive (i.e. $Req_{TQ,i} = 0$), then a new leaf is created in step S203. Then, in step S204, a determination is made as to whether $Gr_{TQ,i}$ is null and whether the secondary tree is full. If the secondary tree is full, or $Gr_{TQ,i}$ is null, the leaf is injected into the primary binary tree in step S205. On the other hand, the leaf is injected into the secondary binary tree at step S206 if $Gr_{TQ,i}$ is not null and the number of leaf present in the secondary tree does not exceed the maximum size of that tree minus 1.

If, in step S207, the $LL_i$ is inactive and at least one other $LL_i$ is active, step S208 will be performed and the $TTT_i$ will be updated to the largest value of the current $TTT_i$ of the current $LL_i$ and the smallest $TTT_i$ value of the remaining active $LL_i$. If, on the other hand, is step S207, no other LLi is found to be active, then step S209 will be performed and the $TTT_i$ value of the current $LL_i$ will be set to the largest value of the current value of $TTT_i$ for the current $LL_i$ and the most recent transmission time of any $LL_i$ (i.e. $TTT^{-1}$).

Then, whether another active $LL_i$ exists or not, in step S210, the $Req_{TQ,i}$ is updated by subtracting $Gr_{TQ,i}$ (the number of TQs granted during the current cycle k to logical link $LL_i$ for transmission of data packets during the next cycle k+1) from the value of $M_i$.

The image queue length $Req_{TQ,i}$ is thus representative of a remaining number of timeslots to be allocated to the logical link $LL_i$ so that it can transmit $M_i$ TQs of data packets. In some embodiments, $TTT_i$ are absolute values, which can be initialized to zero for each logical link $LL_i$, for example. Alternatively, in other embodiments, $TTT_i$ for logical link $LL_i$ can be initialized to $T_i$.

As will be appreciated, the above algorithm favours the allocation of TQs for a logical link $LL_i$ that was inactive before the reception of the REPORT message and that requires a number $M_i$ of TQs for transmission of data packets. Indeed, if at least one logical link $LL_i$ of the EPON is active, then the $TTT_i$ allocated to the logical link $LL_i$ is equal to the maximum among the last $TTT_i$ allocated to it and the minimum $TTT_i$ value of the remaining active logical links $LL_i$. Indeed, it is possible that inactive logical links have not transmitted data for a long time and TQs can be allocated to them quite fast to respect the fairness of the queuing scheme. Otherwise, the $TTT_i$ allocated to the logical link $LL_i$ is equal to the maximum among the last $TTT_i$ allocated to it and the time at which the most recent data packet has been sent by one of the logical links in the EPON, namely $TTT^{-1}$.

If the logical link $LL_i$ sending the REPORT message was already active, then the image queue length $Req_{TQ,i}$ is simply equal to the number of TQs $M_i$ that are required by the logical link $LL_i$ minus the number of granted resource $Gr_{TQ,i}$ for the currently scheduled cycle k. If the logical link $LL_i$ is inactive, then $Gr_{TQ,i}$ is zero and $Req_{TQ,i} = M_i$. After the scheduler has updated the image queue length $Req_{TQ,i}$, it waits for a new REPORT message to be received during the cycle k, which timeslot allocations have been scheduled during cycle k-1.

As the number of $LL_i$ scheduled in one DBA frame is limited by the proposed method, the number of queue updates that occurs during one DBA cycle is also bounded, and will therefore not be critical in terms of system performance.

In accordance with the present invention, the abovementioned algorithm is implemented by updating a first binary tree for fast $TTT_i$ ordering and the LLID context.

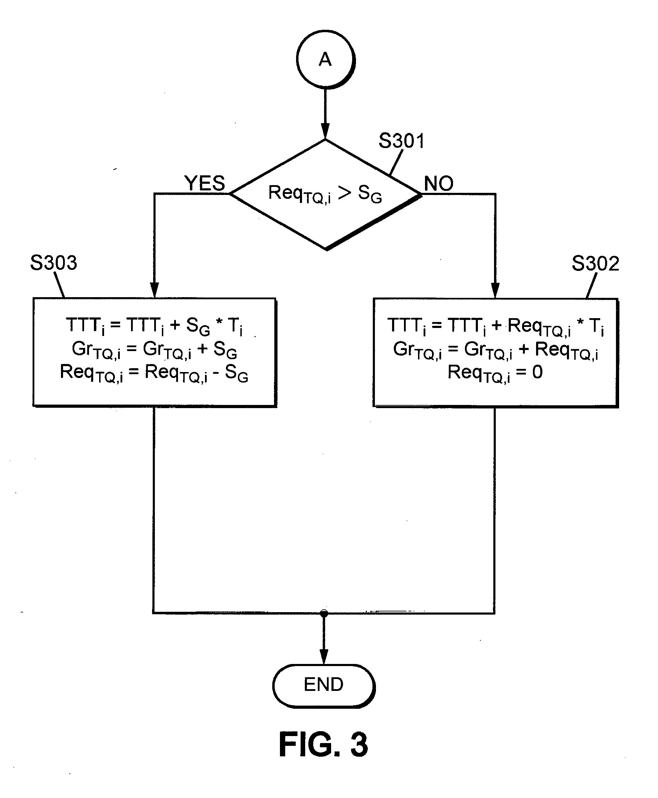

The second process being implemented by the present invention is the queue service operation, which is a process that can be continuously executed during a DBA cycle in order to prepare the next cycle composition. Accordingly, the scheduling of one DBA cycle is prepared one DBA cycle ahead as shown in Figures 3, 4 and 5. At the end of one DBA cycle, the scheduling of the next DBA is terminated. Each queue service is an independent round that consists in selecting one LLID, updating the number of required TQs (i.e. $Req_{TQ,i}$) and the number of allocated or granted TQs (i.e. $Gr_{TQ,i}$), updating the $TTT_i$ and updating the values of the first and second binary trees and the LLID contexts accordingly.

In one embodiment of the invention, each queue service round is implemented as a background process, and a delay is introduced between each round such that the amount of time required for execution of the round matches the time required to emit the number of TQs granted during that round.

The number of queue service rounds in one DBA cycle depends on the service granularity value, which is the maximum number of bytes that are granted to the selected LLID on each queue service round. The maximum number of TQs granted during one round is noted $S_G$. In some embodiments, each $LL_i$ can have an individualised value of $S_G$, noted $S_{Gi}$ (not shown). The number of scheduling queue service rounds in one DBA cycle can be approximately equal to [LinkSpeed*$T_{DBA}$/8]/$S_G$, where $T_{DBA}$ is the DBA cycle duration. As will be appreciated, more queue service rounds may be possible in cases where $Req_{TQ,i} < S_G$ for a number of $LL_i$ in the DBA cycle.

Because the number of resources (i.e. TQ) is fixed in each DBA cycle, the next queue service round can be scheduled to occur after the time required to emit the granted TQs in the current service round. In this embodiment, the time expressed in TQ of the next queue service round can be calculated as follows:

$$t_{k+1} = t_0 + t_k + \min(S_G, Req_{TQi}),$$

where $t_0$ is defined as the beginning of the DBA cycle, and thus as the time of the first queue service round for the current DBA cycle.

The following subroutine (illustrated in Figure 3) is applied to determine the number of granted bytes for the selected LLID for each queue service round, and is also used to update the values of $TTT_i$, $Gr_{TQ,i}$ and $Req_{TQ,i}$.

$$\mathbf{If}\ \mathrm{Req_{TQ,i}} > \mathrm{S_G}$$

$$\mathrm{TTT_i} = \mathrm{TTT_i} + \mathrm{S_G}*\mathrm{T_i}$$

$$\mathrm{Gr_{TQ,i}} = \mathrm{Gr_{TQ,i}} + \mathrm{S_G}$$

$$\mathrm{Req_{TQ,i}} = \mathrm{Req_{TQ,i}} - \mathrm{S_G}$$

$$\mathbf{Else}$$

$$\mathrm{TTT_i} = \mathrm{TTT_i} + \mathrm{Req_{TQ,i}}*\mathrm{T_i}$$

$$\mathrm{Gr_{TQ,i}} = \mathrm{Gr_{TQ,i}} + \mathrm{Req_{TQ,i}}$$

$$\mathrm{Req_{TQ,i}} = 0$$

$$\mathbf{Endif}$$

The algorithm of Figure 3 starts with step S301, where a determination is made as to whether the required amount of resources (i.e. the number of TQs required, or, $\mathrm{Req_{TQ,i}}$) is larger than the maximum permissible number of TQs granted in a single round (i.e. $\mathrm{S_G}$). If a determination is made that $\mathrm{Req_{TQ,i}}$ is larger than $\mathrm{S_G}$, then the method proceeds to step S303, where the $\mathrm{TTT_i}$ of the $\mathrm{LL_i}$ is set to the sum of the current value of the $\mathrm{TTT_i}$ and the product of the $\mathrm{LL_i}$'s $\mathrm{T_i}$ value and the maximum permissible number of TQs granted in a single round (i.e. $\mathrm{S_G}$). Then, the number of granted TQs (i.e. $\mathrm{Gr_{TQ,i}}$) for DBA cycle k+1 is updated to the sum of the current number of granted TQs (i.e. $\mathrm{Gr_{TQ,i}}$) and the maximum permissible number of TQs granted in a single round (i.e. $\mathrm{S_G}$). Finally, the maximum permissible number of TQs granted in a single round (i.e. $\mathrm{S_G}$) is removed from the current amount of requested TQs (i.e. $\mathrm{Req_{TQ,i}}$).

If, in step S301, $\mathrm{Req_{TQ,I}}$ is found to be smaller or equal to $\mathrm{S_G}$, then the method proceeds to step S302. In step S302, the $\mathrm{TTT_i}$ of the $\mathrm{LL_i}$ is set to the sum of the current value of the $\mathrm{TTT_i}$ and the product of the $\mathrm{LL_i}$'s $\mathrm{T_i}$ value and the current amount of requested TQs (i.e. $\mathrm{Req_{TQ,i}}$). Then, the number of granted TQs (i.e. $\mathrm{Gr_{TQ,i}}$) for DBA cycle k+1 is updated to the sum of the current number of granted TQs (i.e. $\mathrm{Gr_{TQ,i}}$) and the current amount of requested TQs (i.e. $\mathrm{Req_{TQ,i}}$). Finally, $\mathrm{Req_{TQ,i}}$ is set to zero. After the completion of step S302 or S303, the subroutine is ended.

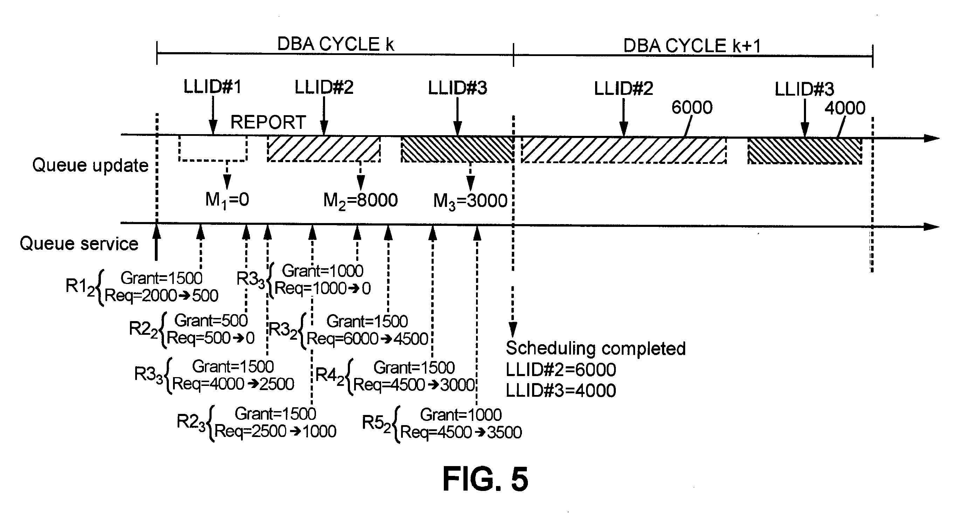

The results of the algorithm of Figure 3 can be seen in Figure 5, where 8 queue service cycles are run in order to build the DBA cycle k+1 in light of the contents of the incoming REPORT messages in DBA cycle k, with the queue update information at the top of the figure, and the queue service information at the bottom of the figure.

As can be seen, in DBA cycle k, three LLIDs are given resources. At the end of each transmit, a queue update process is executed in accordance with the above method. In this example, LLID#1 sends a report message containing $\mathrm{M_i} = 0$. It will therefore not be allocated any resources in DBA round k+1. LLID#2 however requests 8000 TQs, while LLID#3000 requests 3000 TQs. Each time a new report message is received, the $\mathrm{TTT_i}$ value and $\mathrm{Req_{TQ,i}}$ value for the LLID in question will be updated in accordance with the method of Figure 3. For example, as can be seen from Figure 5, the second queue service round performed on LLID#2, i.e. $\mathrm{R2_2}$, results in LLID#2 being granted 500 TQs ($\mathrm{Gr_{TQ,2}} = 1500+500=2000$), and the number of requested TQs falling from 500 to 0. Then, however, when the REPORT message arrives after transmission of the LLID#2 requesting 8000TQ, the number of requested TQs is set to 6000 using the above described queue update algorithm. Indeed, at the time of REPORT arrival, $\mathrm{Gr_{TQ,2}}$ is equal to 2000, so applying the queue update algorithm, it comes that $\mathrm{Req_{TQ2}}$ is equal to (8000-2000). This increase in $\mathrm{Req_{TQ,i}}$ is evidenced by the initial value of $\mathrm{Req_{TQ,i}}$ at the beginning of queue service round $\mathrm{R3_2}$, in which $\mathrm{Req_{TQ,i}}$ passes from 6000 TQ to 4500 TQ. As will be appreciated, the value of $\mathrm{S_G}$ in the example of Figure 5 is 1500 TQs.

As described in Self-Clocked Fair Queuing (SCFQ) algorithms in accordance with the prior art, scheduled LLIDs are selected according to the value of $\mathrm{TTT_i}$. In accordance with the prior art, the backlogged LLID with minimum $\mathrm{TTT_i}$ is selected.

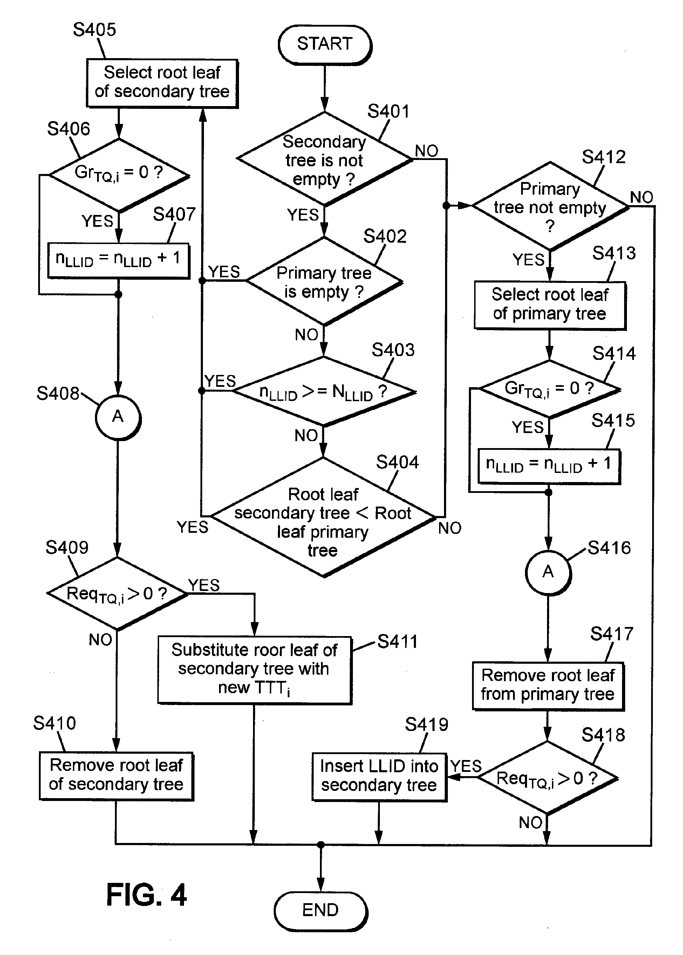

In order to apply the LLID limitation per DBA cycle in accordance with the present invention, a secondary tree is used to store and order $\mathrm{TTT_i}$ of LLIDs currently scheduled. The operations performed to select the scheduled LLIDs and update the tree are described below with reference to Figure 4. Using a binary tree to order the $\mathrm{TTT_i}$, the root leaf will contain the LLID with minimum $\mathrm{TTT_i}$. Once a queue service is performed, the tree is either updated with the newly calculated $\mathrm{TTT_i}$ (leaf substitution) or the root leaf is removed if the LLID becomes non-backlogged (i.e. inactive) after the queue service.

With reference to the algorithm set out below and shown in Figure 4, the variable $\mathrm{n_{LLID}}$ represents the number of different LLIDs scheduled in the next DBA cycle, and $\mathrm{N_{LLID}}$ represents the maximum targeted number of LLID per DBA cycle. $\mathrm{N_{LLID}}$ is set to a value of N at the beginning of each DBA cycle, N representing the initial targeted $\mathrm{N_{LLID}}$ for a DBA cycle, and being fixed by the system administrator.

**If** *SecondaryTree* is not empty AND [(*PrimaryTree* is Empty) OR ($n_{LLID}>=N_{LLID}$)

OR (min*SecondaryTree*($TTT_i$)< min*PrimaryTree*($TTT_i$) ) ]

      Select the LLID i of the root leaf of the *SecondaryTree*

      **If** $Gr_{TQ,i} = 0$

          $n_{LLID} = n_{LLID} + 1$

      **Endif**

      Update $TTT_i$, $Gr_{TQ,i}$ and $Req_{TQ,I}$ using subroutine

      **If** $Req_{TQ,i} > 0$,

          substitutes the root leaf of *SecondaryTree* with the new $TTT_i$

      **Else**

          remove the root leaf of *SecondaryTree*

**Else if** *PrimaryTree* is not empty

      Select the LLID i of the root leaf of *PrimaryTree*

      **If** $Gr_{TQ,i} = 0$

          $n_{LLID} = n_{LLID} + 1$

      **Endif**

      Update $TTTi$, $Gr_{TQ,i}$ and $Req_{TQ,i}$ using subroutine

      Remove the root leaf of *PrimaryTree*

      **If** $Req_{TQ,I} > 0$,

          insert the LLID into *SecondaryTree*

      **Endif**

          **Endif**

The process begins in step S401 with a determination that as to whether the secondary binary tree is empty. If the second binary tree is not empty, the process is continued to steps S402, S403 and S404, where determinations are made as to whether the primary binary tree is empty (S402), the number of different LLIDs in the DBA cycle k+1, $n_{LLID}$, is larger or equal to the maximum allowed number of different LLIDs in a single DBA round, $N_{LLID}$, (S403), and whether the root leaf of the secondary binary tree is smaller than the root leaf of the primary binary tree (S404). In the event that any of steps S402, S403 and S404 can be answered in the affirmative, the process continues to step S405, where the root leaf of the secondary tree is selected for manipulation.

Then, in step S406, a determination is made as to whether $Gr_{TQ,i}$ is greater than zero, meaning whether or not the $LL_i$ has resources already allocated to it in the DBA cycle k+1. If the $LL_i$ does not have resources (i.e. TQs) allocated to it in the next cycle, then it will represent a new $LL_i$ in cycle k+1 and the $n_{LLID}$ will be incremented by 1 at step S407, before proceeding to step S408. If, on the other hand, the $LL_i$ already has resources allocated to it in the next DBA round, the process will simply proceed to step S408 without incrementing $n_{LLID}$. In step S408, the root leaf of the secondary tree is used as a basis for executing the subroutine of Figure 3 (i.e. updating the values of $TTT_i$, $Gr_{TQ,i}$ and $Req_{TQ,I}$ for that $LL_i$).

Once the subroutine is completed, in step S409, a determination is made as to whether the current amount of requested TQs (i.e. $Req_{TQ,i}$) is greater than zero, that is to say whether the $LL_i$ still requires resources after having been granted a certain amount in the subroutine. If further resources are required (i.e. $Req_{TQ,I} > 0$), then the root leaf of the secondary tree is substituted with the new $TTT_i$ in step S411, before termination of the process. If, on the other hand, no further TQs are required, then the root leaf of the secondary tree will simply be removed in step S420 before termination of the process, as it is no longer active.

Returning now to step S401, if the second binary tree is empty, the process is continued at step S412. Similarly, if in all of steps S402, S403 and S404 are answered in the negative, the process continues to step S412, where a determination is made as to whether the primary tree is empty. If the primary tree is empty, and having determined in step S401 that the secondary tree is also empty, the process is terminated, in that no active links exist.

If, on the other hand, the primary tree is not empty, then the root leaf of the primary tree is selected for future manipulation in step S413. Then, in step S414, a determination is made as to whether $Gr_{TQ,i}$ is greater than zero, meaning whether or not the $LL_i$ has resources already allocated to it in the DBA cycle k+1. If the $LL_i$ does not have resources (i.e. TQs) allocated to it in the next cycle, then it will represent a new $LL_i$ in cycle k+1 and the $n_{LLID}$ will be incremented by 1 at step S415, before proceeding to step S416. If, on the other hand, the $LL_i$ already has resources allocated to it in the next DBA round, the process will simply proceed to step S416 without incrementing $n_{LLID}$. In step S416, the root leaf of the primary tree is used as a basis for executing the subroutine of Figure 3 (i.e. updating the values of $TTT_i$, $Gr_{TQ,i}$ and $Req_{TQ,I}$ for that $LL_i$).

Upon completion of the subroutine, the process continues at step S417, where the root leaf of the primary tree is removed. Then, if at step S418, a determination is made that the $LL_i$ has a requirement for future more TQs (i.e. $Req_{TQ,i} > 0$), then the LLID will be inserted into the secondary tree at step S419. That is to say that when the root leaf of the primary tree is removed at step S417, it will be inserted into the secondary tree if it requires further resources, and will simply be discarded if it does not.

The end of scheduling is reached either when there are no more resource to share (i.e next cycle is full) or when all LLID queues are empty (i.e. all LLIDs requests have been granted). In the first case, it is then necessary to inject all the remaining leaves of the secondary tree into the primary tree. Then, the system will generate some GATE messages for every LLIDs with non null $Gr_{TQ,i}$ based on that value. After that, $Gr_{TQ,i}$ values for every LLIDs are reset.

The maximum depth of the secondary tree is equal to $\log_2(N_{LLID})$ and is lower than the depth of the primary tree equal to $\log_2(MaxNumberOfLLID)$. Consequently, the operations on the secondary tree are faster than those on the primary tree. This behaviour allows to accelerate the scheduling service processing compare to a single binary tree solution, except when there is a lot of LLIDs with few resource requirement. Indeed, in this case, each LLID is completely served by one scheduling service round and it does not enter the secondary tree.

This algorithm does not guaranty that the final number of scheduled LLIDs in one DBA frame is lower than $N_{LLID}$. However, it performs a trade-off between $N_{LLID}$, the filling ratio of the DBA cycle (try to use all the available resource) and the fairness between LLIDs (LLID with lower $TTT_i$ are always favoured while the number of scheduled LLID is lower than $N_{LLID}$). As described above, the variable $n_{LLID}$ represents the number of different LLIDs scheduled in the next DBA cycle, and $N_{LLID}$ represents the maximum targeted number of LLID per DBA cycle. $N_{LLID}$ is set to a value of N at the beginning of each DBA cycle, N representing the initial targeted $N_{LLID}$ for a DBA cycle, and being fixed by the system administrator.

When $n_{LLID}$ has reaches the targeted value ($N_{LLID}$) during a DBA cycle and the secondary tree is empty, then $N_{LLID}$ is increased using the following formula:

$$N_{LLID} = N_{LLID} + ceiling[N*(RemainingResource)/(ResourcePerDBACycle)],$$

where the value of RemainingResource is equal to the number of unscheduled TQs in DBA round (k+1) and the ResourcePerDBACycle is the total number of TQs in a DBA cycle.

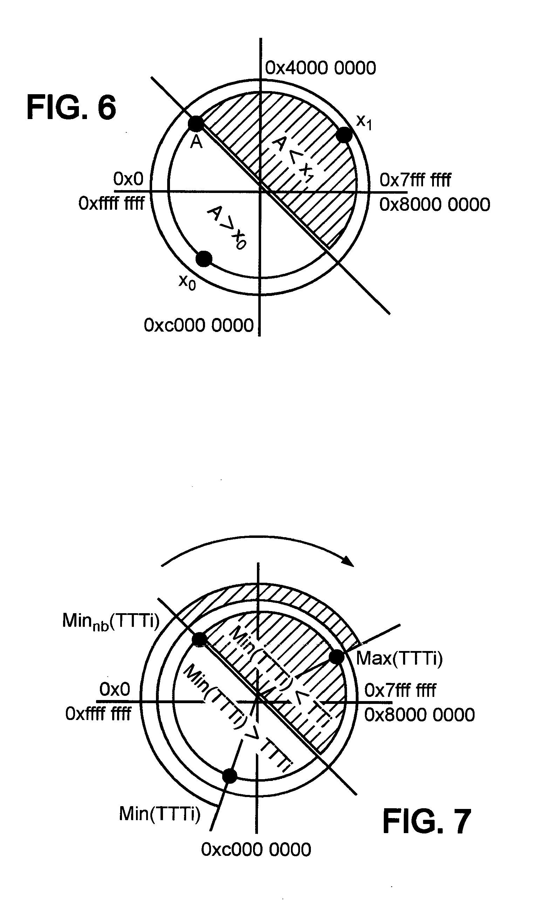

In order to guaranty a valid leaf value comparison, the binary tree algorithm in accordance with an advantageous embodiment of the present invention uses signed comparison to ensure wrap-up coherency. Figures 6 and 7 illustrates comparative results for a particular value A. Using the signed comparison, every value located in the non-shaded half-circle is lower than A while values located in the shaded half-circle are higher.

If A is equal to $min_{NB}(TTT_i)$, the minimum value of $TTT_i$ for non-backlogged LLs, then the non-backlogged LLs must be all included in the shaded half circle. This assumption is always true for active LLIDs because they are periodically selected and their $TTT_i$ is increased starting from $min(TTT_i)$. On the contrary, inactive LLIDs are not updated and their $TTT_i$ may fall in the non-shaded half-circle and then in the shaded half-circle after a long period of inactivity, which is not valid since the signed comparison gives a wrong result.

This is the reason why a background process is required to periodically check and update the $TTT_i$ of inactive LLIDs to the minimum $TTT_i$ value of active LLIDs. Indeed, inactive LLIDs are inserted in the tree with a $TTT_i$ at least equal to $min_{NB}(TTT_i)$ when they become active. Accordingly, this $TTT_i$ modification has no impact on the SCFQ algorithm in accordance with the present invention and is very efficient to implement. The main constraint is to define a scanning period $T_{Scan}$ in which all inactive connections shall be scan by a background process.

In Weighted Fair Queuing algorithms, $TTT_i$ and $T_i$ are time values that can be expressed in EPON Time Quantum (TQ) unit (1TQ = 2 bytes) or as a multiple $N_u$ of TQ. Using that definition, each time k bytes are granted to a given LLID, its associated $TTT_i$ must be updated using the formula: $TTT_i = TTT_i + ceil [k/2Nu] * T_i$. Over the $T_{Scan}$ period, the maximum increase of min($TTT_i$) is then equal to $[T_{Scan}.LinkSpeed/8]/2N_u$ (in a case where only one LLID is active during the $T_{Scan}$ period).

If $N_b$ is the number of bits used to encode $TTT_i$, then all inactive LLIDs shall be checked over the $T_{Scan}$ period, that is, before $2^{Nb-1}$ bytes have been granted. Then, $N_u \geq [T_{Scan}.LinkSpeed/8]/ 2^{Nb}$.

For implementation convenience (replace division by bit shifting), $N_u$ can be chosen as a power of two. For instance, with $T_{Scan}$ set to 512ms (1 LLID polled every 1ms), $N_u$=256 for a 10Gigabit EPON. Using a large $N_u$ value introduces some jitter in the fair queuing allocation algorithm. However, this jitter can be considered as negligible compared to the jitter introduced by the limitation of LLID per DBA frames.

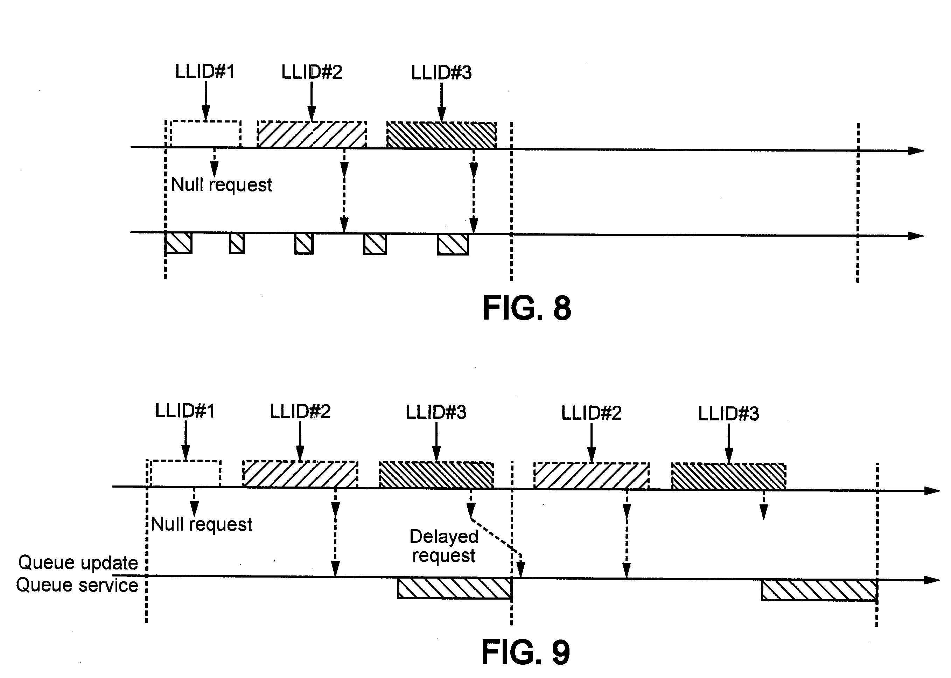

As shown in Figure 8, in a first embodiment of the present invention, the scheduling queue service process is executed as a background process regularly distributed among the whole cycle using $t_k$ method calculation as disclosed in the previous section. In that case, each scheduling round is an atomic and short operation that is easily interlaced with other tasks performed by the CPU. The main advantage of such an embodiment is that the induced jitter to execute other processes is bounded by the maximum time required to execute one scheduling round. For instance, such a low delay may be very important for real time operating system in order to reduce FIFO length when a process receives some data from other parts of the system (e.g. REPORT messages). However, each time a scheduling round occurs, the execution context is reloaded, which results in overhead (cache reloading, etc).

In a second embodiment, shown in Figure 9, the scheduling queue service process is executed in one burst, that is, all scheduling service rounds are executed by the CPU without being interrupted by other tasks. In that case, the time required to execute the whole scheduling service task is much longer and results in introducing longer jitter to start execution of other processes.

However, task context reloading is not required and code is executed faster since it can stay in the primary cache of the CPU. In addition, some optimizations can be made when queue update are performed upon REPORT message reception. Indeed, when REPORT messages are processed by the CPU, the scheduling service process has not been yet started and it is simpler to directly allocate some resource to requesting LLIDs.

The maximum number of scheduling rounds that can be performed during a DBA cycle depends on the available processor resource and the time required to perform each round. Let $t_{SchRound,k}$ be the time required to perform the $k_{th}$ scheduling service round and $c_{SchRound,k}$ be the corresponding number of CPU cycles ($c_{SchRound,k} = t_{SchRound,k} * CPU_{Speed}$). $c_{SchRound,k}$ can be bounded by max($c_{SchRound,k}$) and its average can be noted mean($c_{SchRound,k}$). Let $R_{SchRound}$ be the ratio of the CPU resource that is dedicated to scheduling service process (e.g. 50%). Then, it follows that the maximum number of scheduling rounds in one DBA cycle of duration $T_{DBA}$ is equal to: $T_{DBA}*CPU_{Speed}*R_{SchRound}/max(c_{SchRound,k})$. As explained above, it can also be approximated by $[LinkSpeed*T_{DBA}/8]/S_G$. Then, it follows that the scheduling service granularity can be determined by the formula:

$$S_G \geq \frac{LinkSpeed}{8.CPU_{Speed}} \times \frac{\max_k \left( c_{SchRound,k} \right)}{R_{SchRound}}.$$

It can be noted that the granularity can be dynamically adapted to the available processor resource represented by $R_{SchRound}$. It is inversely proportional to $R_{SchRound}$, so adaptation can be easily performed in real-time. Variation of granularity will increase jittering because it will create longer bursts of data on optical link. However, other QoS parameters (mean delay, bandwidth) are not impacted by it. Moreover, it will not modify global scheduling (i.e. the entire available bandwidth will continue to be shared among the backlogged Logical Links).

As will be appreciated, the present invention can also be embedded in a computer program product, which comprises all the features enabling the implementation of the methods described herein, and which, when loaded in an information processing system, causes the information processing system. Computer program means or computer program in the present context mean any expression, in any language, code or notation, of a set of instructions intended to cause a system having an information processing capability to perform a particular function either directly or after the conversion to another language.

Such a computer program can be stored on a computer or machine readable medium allowing data, instructions, messages or message packets, and other machine readable information to be read from the medium. The computer or machine readable medium may include non-volatile memory, such as ROM, Flash memory, Disk drive memory, CD-ROM, and other permanent storage. Additionally, a computer or machine readable medium may include, for example, volatile storage such as RAM, buffers, cache memory, and network circuits. Furthermore, the computer or machine readable medium may comprise computer or machine readable information in a transitory state medium such as a network link and/or a network interface, including a wired network or a wireless network, that allow a device to read such computer or machine readable information.

The functionality of the elements shown in the Figures can be provided using either dedicated hardware and/or software. The expressions "processing", "processing means" and "processing module" can include, but is not limited to, any of digital signal processor (DSPs) hardware, network processors, application specific integrated circuits (ASICs), field programmable gate arrays (FPGAs), read only memories (ROMs) for storing software, random access memories (RAMs), and non volatile storage.

**Claims**

1. A method of allocating transmission timeslots in a packet-based network in which time is divided into scheduling cycles and each scheduling cycle is divided into a plurality of timeslots, the network comprising a plurality of logical links being managed by a terminal (1), the terminal associating to each logical link a number of granted timeslots representing the resources that the logical link is allowed to use to transmit packets in the next scheduling cycle, a number of required timeslots representing the resources that the logical link requires to transmit unscheduled packets, and a theoretical transmission time, wherein
active logical links have at least one required timeslot and inactive logical links have no required timeslots,
scheduled logical links have at least one granted timeslot and unscheduled logical links having no granted timeslots, and
the method makes use of a first binary tree and a second binary tree of predetermined maximum sizes, the first binary tree comprising leaves representing unscheduled active logical links and the second binary tree comprising leaves representing scheduled active logical links with non null required timeslots,
the method comprising the steps of:

upon receipt of a REPORT message (5201) relating to a logical link:

if the logical link is inactive, updating the theoretical transmission time of the logical link and generating a new leaf associated with the logical link (5203), adding the new leaf to the first binary tree if the logical link is not scheduled or if the second binary tree is full (5205), adding the new leaf to the second binary tree if the logical link is scheduled and the second binary tree is not full (5206);
updating the required timeslot value for the logical link; and
sorting the first and second binary trees according to the values of the theoretical transmission time associated with each represented logical link; and

for each scheduling cycle:
initializing all granted timeslot values to zero;
if the second binary tree is not empty and the first binary tree is empty, or if the second binary tree is not empty and the theoretical transmission time of the root leaf of the second binary tree is smaller than the theoretical transmission time of the root leaf of the first binary tree, granting a number of timeslots in the next scheduling cycle to the logical link associated with the root leaf of the second binary tree and updating the theoretical transmission time, the granted timeslot value and the required timeslot value of the logical link associated with the root leaf of the second binary tree accordingly;
if the second binary tree is empty and the first binary tree is not empty, granting a number of timeslots in the next scheduling cycle to the logical link associated with the root leaf of the first binary tree and updating the theoretical transmission time, the granted timeslot value and the required timeslot value of the logical link associated with the root leaf of the first binary tree, before removing the root leaf of the first binary tree and adding it to the second binary tree if the associated logical link is still active;
sorting the first and second binary trees according to the values of the theoretical transmission time associated with each represented logical link;
repeating the steps of granting, updating and sorting until all the timeslots in the next scheduling cycle have been granted or there are no more active logical links; and
transferring any leaves remaining in the second binary tree to the first binary tree.

2. The method of claim 1, wherein:

if the required timeslot value is superior to a fixed maximum value, the step of granting a number of timeslots comprises incrementing the current granted timeslot value by the fixed maximum value, the step of updating the theoretical transmission time comprises incrementing the theoretical transmission time by a value equivalent to the product of the fixed maximum value and the inverse of a weight associated with a logical link, and the step of updating the required timeslot value comprises decrementing the required timeslot value by the fixed maximum value;

if the required timeslot value is not superior to a fixed maximum value, the step of granting a number of timeslots comprises incrementing the current granted timeslot value by the required timeslot value, the step of updating the theoretical transmission time comprises incrementing the theoretical transmission time by a value equivalent to the product of the required timeslot value and the inverse of a weight associated with a logical link and the step of updating the required timeslot value comprises setting the required timeslot value to zero.

3. The method of claim 2, wherein an independently fixed maximum value is associated with each logical link.

4. The method of any of the preceding claims, wherein,

the step of granting a number of timeslots in the next scheduling cycle to the logical link associated with the root leaf of the second binary tree is only performed if the number of different logical links scheduled in the next cycle is inferior to a targeted maximum number of different logical links, and prior to the step of sorting the first and second binary trees, the method further comprises the step of:

incrementing the number of different logical links scheduled in the next cycle by 1 if the logical link is unscheduled.

5. The method of claim 4, wherein if the second binary tree is empty and the number of different logical links scheduled in the next cycle reaches the targeted maximum number of different logical links, the targeted maximum number of different logical links is incremented by a value equal to a predetermined initial maximum number of different logical links in a given cycle multiplied by the proportion of the number of remaining unscheduled timeslots in the next scheduling round to the total number of timeslots in the next scheduling round.

6. The method of any of the preceding claims, wherein, upon receipt of the REPORT message, the step of updating the theoretical transmission time of the inactive logical link further comprises:

setting the theoretical transmission time to the largest value between the value of the current theoretical transmission time of the logical link and the smallest theoretical transmission time of any active logical link, if other active logical links exist; and

setting the theoretical transmission time to the largest value between the value of the current theoretical transmission time of the logical link and the most recent transmission time of any logical link, if no other active logical links exist.

7. The method of any of the preceding claims, where each repetition of the steps of granting, updating and sorting is separated by an interval during a scheduling cycle.

8. The method of claim 7, wherein the interval between each repetition is equal to the time required to transmit the number of timeslots which has been added to the granted timeslot value during the preceding step of updating the granted timeslot value.

9. The method of any of claims 1 to 6, wherein the repetitions of the steps of granting, updating and sorting are performed without interruption at the end of the scheduling cycle.

10. The method of any of the preceding claims, wherein each logical link comprises a memory context which includes the associated logical link ID, the associated required timeslot value, the associated granted timeslot value and the associated theoretical transmission time value.

11. The method of any of the preceding claims, wherein the theoretical transmission time is encoded in the most significant bits of the leaves of the first and second binary trees.

12. The method of any of the preceding claims, wherein the step of sorting the first and second binary tree is performed using signed comparison of theoretical transmission time values.

13. The method of claim 12, wherein the method further comprises the step of:

periodically setting the theoretical transmission time of all inactive logical links to the theoretical transmission time value of the active logical link with the minimum theoretical transmission time value.

14. An Ethernet Passive Optical Network Optical Line Terminal (1) arranged to execute the method steps in accordance with any of the preceding claims.

15. A computer program product for a data-processing device, the computer program product comprising a set of instructions which, when loaded into the data-processing device, causes the device to perform the steps of the method of claims 1 to 13.


**Patentansprüche**

1. Verfahren zum Zuweisen von Sendezeitschlitzen in einem Netzwerk auf Paketbasis, in welchem die Zeit in Planungszyklen aufgeteilt ist und jeder Planungszyklus in mehrere Zeitschlitze aufgeteilt ist, wobei das Netzwerk mehrere logische Verbindungen umfasst, die von einem Terminal (1) verwaltet werden, wobei das Terminal jeder logischen Verbindung eine Anzahl gewährter Zeitschlitze, welche die Ressourcen darstellen, die die logische Verbindung verwenden darf, um in dem nächsten Planungszyklus Pakete zu senden, eine Anzahl benötigter Zeitschlitze, welche die Ressourcen darstellen, die die logische Verbindung benötigt, um ungeplante Pakete zu senden, und eine theoretische Sendezeit zuordnet, wobei
aktive logische Verbindungen mindestens einen benötigten Zeitschlitz aufweisen und inaktive logische Verbindungen keine benötigten Zeitschlitze aufweisen,
geplante logische Verbindungen mindestens einen gewährten Zeitschlitz aufweisen und ungeplante logische Verbindungen keine benötigten Zeitschlitze aufweisen,
das Verfahren von einem ersten Binärbaum und einem zweiten Binärbaum vorgegebener maximaler Größen Gebrauch macht, wobei der erste Binärbaum Blätter umfasst, welche ungeplante aktive logische Verbindungen darstellen, und der zweite Binärbaum Blätter umfasst, welche geplante aktive logische Verbindungen mit nicht null benötigten Zeitschlitzen darstellen,
wobei das Verfahren die folgenden Schritte umfasst:

nach dem Empfang einer REPORT-Meldung (5201), die sich auf eine logische Verbindung bezieht:

wenn die logische Verbindung inaktiv ist, Aktualisieren der theoretischen Sendezeit der logischen Verbindung und Erzeugen eines neuen Blatts, welches zu der logischen Verbindung gehört (5203), Hinzufügen des neuen Blatts zu dem ersten Binärbaum, wenn die logische Verbindung nicht geplant ist oder wenn der zweite Binärbaum voll ist (5205), Hinzufügen des neuen Blatts zu dem zweiten Binärbaum, wenn die logische Verbindung geplant ist und der zweite Binärbaum nicht voll ist (5206),
Aktualisieren des Wertes benötigter Zeitschlitze für die logische Verbindung und
Sortieren des ersten und zweiten Binärbaums gemäß den Werten der theoretischen Sendezeit, die zu jeder dargestellten logischen Verbindung gehören; und

für jeden Planungszyklus:

Initialisieren aller Werte gewährter Zeitschlitze auf Null;
wenn der zweite Binärbaum nicht leer ist und der erste Binärbaum leer ist, oder wenn der zweite Binärbaum nicht leer ist und die theoretische Sendezeit der Wurzel des zweiten Binärbaums kürzer als die theoretische Sendezeit der Wurzel des ersten Binärbaums ist, Gewähren einer Anzahl von Zeitschlitzen in dem nächsten Planungszyklus für die logische Verbindung, die zu der Wurzel des zweiten Binärbaums gehört, und entsprechendes Aktualisieren der theoretischen Sendezeit, des Wertes gewährter Zeitschlitze und des Wertes benötigter Zeitschlitze der logischen Verbindung, die zu der Wurzel des zweiten Binärbaums gehört;
wenn der zweite Binärbaum leer ist und der erste Binärbaum nicht leer ist, Gewähren einer Anzahl von Zeitschlitzen in dem nächsten Planungszyklus für die logische Verbindung, die zu der Wurzel des ersten Binärbaums gehört, und Aktualisieren der theoretischen Sendezeit, des Wertes gewährter Zeitschlitze und des Wertes benötigter Zeitschlitze der logischen Verbindung, die zu der Wurzel des ersten Binärbaums gehört, vor dem Entfernen der Wurzel des ersten Binärbaums und Hinzufügen dieser zu dem zweiten Binärbaum, wenn die zugehörige logische Verbindung noch aktiv ist;
Sortieren des ersten und zweiten Binärbaums gemäß den Werten der theoretischen Sendezeit, die zu jeder dargestellten logischen Verbindung gehören;

Wiederholen der Schritte des Gewährens, Aktualisierens und Sortierens, bis alle Zeitschlitze im nächsten Planungszyklus gewährt worden sind oder es keine aktiven logischen Verbindungen mehr gibt; und Übertragen aller Blätter, die in dem zweiten Binärbaum verbleiben, auf den ersten Binärbaum.

2. Verfahren nach Anspruch 1, wobei:

wenn der Wert benötigter Zeitschlitze höher als ein festgesetzter Maximalwert ist, der Schritt des Gewährens einer Anzahl von Zeitschlitzen das Erhöhen des aktuellen Wertes gewährter Zeitschlitze um den festgesetzten Maximalwert umfasst, der Schritt des Aktualisierens der theoretischen Sendezeit das Erhöhen der theoretischen Sendezeit um einen Wert gleich dem Produkt aus dem festgesetzten Maximalwert und dem Kehrwert einer Gewichtung umfasst, die zu einer logischen Verbindung gehört, und der Schritt des Aktualisierens des Wertes benötigter Zeitschlitze das Erniedrigen des Wertes benötigter Zeitschlitze um den festgesetzten Maximalwert umfasst;
wenn der Wert benötigter Zeitschlitze nicht höher als ein festgesetzter Maximalwert ist, der Schritt des Gewährens einer Anzahl von Zeitschlitzen das Erhöhen des aktuellen Wertes gewährter Zeitschlitze um den Wert benötigter Zeitschlitze umfasst, der Schritt des Aktualisierens der theoretischen Sendezeit das Erhöhen der theoretischen Sendezeit um einen Wert gleich dem Produkt aus dem Wert benötigter Zeitschlitze und dem Kehrwert einer Gewichtung umfasst, die zu einer logischen Verbindung gehört, und der Schritt des Aktualisierens des Wertes benötigter Zeitschlitze das Einstellen des Wertes benötigter Zeitschlitze auf Null umfasst.

3. Verfahren nach Anspruch 2, wobei zu jeder logischen Verbindung ein unabhängig festgesetzter Maximalwert gehört.

4. Verfahren nach einem der vorhergehenden Ansprüche, wobei
der Schritt des Gewährens einer Anzahl von Zeitschlitzen in dem nächsten Planungszyklus für die logische Verbindung, die zu der Wurzel des zweiten Binärbaums gehört, nur durchgeführt wird, wenn die Anzahl verschiedener logischer Verbindungen, die in dem nächsten Zyklus geplant sind, geringer als eine angestrebte maximale Anzahl verschiedener logischer Verbindungen ist, und das Verfahren vor dem Schritt des Sortierens des ersten und zweiten Binärbaums den folgenden Schritt umfasst:

Erhöhen der Anzahl verschiedener logischer Verbindungen, die in dem nächsten Zyklus geplant sind, um 1, wenn die logische Verbindung ungeplant ist.

5. Verfahren nach Anspruch 4, wobei, wenn der zweite Binärbaum leer ist und die Anzahl verschiedener logischer Verbindungen, die in dem nächsten Zyklus geplant sind, die angestrebte maximale Anzahl verschiedener logischer Verbindungen erreicht, die angestrebte maximale Anzahl verschiedener logischer Verbindungen um einen Wert gleich einer vorgegebenen anfänglichen maximalen Anzahl verschiedener logischer Verbindungen in einem gegebenen Zyklus, multipliziert mit dem Verhältnis der Anzahl verbleibender ungeplanter Zeitschlitze in der nächsten Planungsrunde zu der Gesamtzahl der Zeitschlitze in der nächsten Planungsrunde, erhöht wird.

6. Verfahren nach einem der vorhergehenden Ansprüche, wobei nach dem Empfang der REPORT-Meldung der Schritt des Aktualisierens der theoretischen Sendezeit der inaktiven logischen Verbindung ferner das Folgende umfasst:

Einstellen der theoretischen Sendezeit auf den höchsten Wert zwischen dem Wert der aktuellen theoretischen Sendezeit der logischen Verbindung und der kürzesten theoretischen Sendezeit aller aktiven logischen Verbindungen, wenn andere aktive logische Verbindungen existieren; und
Einstellen der theoretischen Sendezeit auf den höchsten Wert zwischen dem Wert der aktuellen theoretischen Sendezeit der logischen Verbindung und der letzten Sendezeit aller logischen Verbindungen, wenn keine anderen aktiven logischen Verbindungen existieren.

7. Verfahren nach einem der vorhergehenden Ansprüche, wobei alle Wiederholungen der Schritte des Gewährens, Aktualisierens und Sortierens durch ein Intervall während eines Planungszyklus getrennt sind.

8. Verfahren nach Anspruch 7, wobei das Intervall zwischen allen Wiederholungen gleich der Zeit ist, die benötigt wird, um die Anzahl an Zeitschlitzen zu senden, welche während des vorhergehenden Schritts des Aktualisierens des Wertes gewährter Zeitschlitze zu dem Wert gewährter Zeitschlitze hinzugefügt worden sind.

9. Verfahren nach einem der Ansprüche 1 bis 6, wobei die Wiederholungen der Schritte des Gewährens Aktualisierens und Sortierens ohne Unterbrechung am Ende des Planungszyklus durchgeführt werden.

**10.** Verfahren nach einem der vorhergehenden Ansprüche, wobei jede logische Verbindung einen Speicherkontext umfasst, welcher die zugehörige Kennung logischer Verbindungen, den zugehörigen Wert erforderlicher Zeitschlitze, den zugehörigen Wert gewährter Zeitschlitze und den zugehörigen Wert der theoretischen Sendezeit umfasst.

**11.** Verfahren nach einem der vorhergehenden Ansprüche, wobei die theoretische Sendezeit in den höchstwertigen Bits der Blätter des ersten und zweiten Binärbaums codiert ist.

**12.** Verfahren nach einem der vorhergehenden Ansprüche, wobei der Schritt des Sortierens des ersten und zweiten Binärbaums unter Anwendung eines vorzeichenbehafteten Vergleichs von Werten der theoretischen Sendezeit durchgeführt wird.

**13.** Verfahren nach Anspruch 12, wobei das Verfahren ferner den folgenden Schritt umfasst:

periodisches Einstellen der theoretischen Sendezeit aller inaktiven logischen Verbindungen auf den Wert der theoretischen Sendezeit der aktiven logischen Verbindung mit dem minimalen Wert der theoretischen Sendezeit.

**14.** Optikleitungs-Terminal (1) eines passiven optischen Ethernet-Netzwerks, welches dafür eingerichtet ist, die Verfahrensschritte gemäß einem der vorhergehenden Ansprüche auszuführen.

**15.** Computerprogrammprodukt für eine Datenverarbeitungsvorrichtung, wobei das Computerprogrammprodukt einen Befehlssatz umfasst, welcher, wenn er in die Datenverarbeitungsvorrichtung geladen wird, bewirkt, dass die Vorrichtung die Schritte des Verfahrens der Ansprüche 1 bis 13 durchführt.

**Revendications**

**1.** Procédé d'attribution d'intervalles de temps de transmission dans un réseau basé sur des paquets dans lequel le temps est divisé en cycles de planification et chaque cycle de planification est divisé en une pluralité d'intervalles de temps, le réseau comprenant une pluralité de liaisons logiques qui sont gérées par un terminal (1), le terminal associant à chaque liaison logique un nombre d'intervalles de temps octroyés représentant les ressources que la liaison logique est autorisée à utiliser pour transmettre des paquets dans le cycle de planification suivant, un nombre d'intervalles de temps nécessaires représentant les ressources dont la liaison logique a besoin pour transmettre des paquets non planifiés, et un temps de transmission théorique, dans lequel
des liaisons logiques actives ont au moins un intervalle de temps nécessaire et des liaisons logiques inactives n'ont pas d'intervalle de temps nécessaire,
des liaisons logiques planifiées ont au moins un intervalle de temps octroyé et des liaisons logiques non planifiées n'ont pas d'intervalle de temps octroyé, et
le procédé utilise une première arborescence binaire et une deuxième arborescence binaire de tailles maximales prédéterminées, la première arborescence binaire comprenant des feuilles représentant des liaisons logiques actives non planifiées et la deuxième arborescence binaire comprenant des feuilles représentant des liaisons logiques actives planifiées avec des intervalles de temps nécessaires non nuls,
le procédé comprenant les étapes de :

à la réception d'un message REPORT (S201) relatif à une liaison logique :

- si la liaison logique est inactive, la mise à jour du temps de transmission théorique de la liaison logique et la génération d'une nouvelle feuille associée à la liaison logique (S203), l'ajout de la nouvelle feuille à la première arborescence binaire si la liaison logique n'est pas planifiée ou si la deuxième arborescence binaire est pleine (S205), l'ajout de la nouvelle feuille à la deuxième arborescence binaire si la liaison logique est planifiée et la deuxième arborescence binaire n'est pas pleine (S206) ;
- la mise à jour de la valeur d'intervalle de temps nécessaire pour la liaison logique ; et
- le tri des première et deuxième arborescences binaires en fonction des valeurs du temps de transmission théorique associé à chaque liaison logique représentée ; et pour chaque cycle de planification :

l'initialisation de toutes les valeurs d'intervalles de temps octroyés à zéro ;
si la deuxième arborescence binaire n'est pas vide et la première arborescence binaire est vide, ou si la deuxième arborescence binaire n'est pas vide et le temps de transmission théorique de la feuille racine de la deuxième arborescence binaire est inférieur au temps de transmission théorique de la feuille racine de la première arborescence binaire, l'octroi d'un nombre d'intervalles de temps dans le cycle de planification suivant à la liaison logique associée à la feuille racine de la deuxième arborescence binaire et la mise à jour du temps de transmission théorique, de la valeur d'intervalle de temps octroyé et de la valeur d'intervalle de temps nécessaire de la liaison logique associée à la feuille racine de la deuxième arborescence binaire en conséquence ;

si la deuxième arborescence binaire est vide et la première arborescence binaire n'est pas vide, l'octroi d'un nombre d'intervalles de temps dans le cycle de planification suivant à la liaison logique associée à la feuille racine de la première arborescence binaire et la mise à jour du temps de transmission théorique, de la valeur d'intervalle de temps octroyé et de la valeur d'intervalle de temps nécessaire de la liaison logique associée à la feuille racine de la première arborescence binaire, avant la suppression de la feuille racine de la première arborescence binaire et l'ajout de celle-ci à la deuxième arborescence binaire si la liaison logique associée est toujours active ;

le tri des première et deuxième arborescences binaires en fonction des valeurs du temps de transmission théorique associé à chaque liaison logique représentée ;

la répétition des étapes de l'octroi, de la mise à jour et du tri jusqu'à ce que tous les intervalles de temps dans le cycle de planification suivant aient été octroyés ou jusqu'à ce qu'il n'y ait plus de liaison logique active ; et

le transfert des feuilles restantes dans la deuxième arborescence à la première arborescence binaire.

2. Procédé selon la revendication 1, dans lequel :

si la valeur d'intervalle de temps nécessaire est supérieure à une valeur maximale fixée, l'étape de l'octroi d'un nombre d'intervalles de temps comprend l'incrémentation de la valeur d'intervalle de temps octroyé actuelle de la valeur maximale fixée, l'étape de la mise à jour du temps de transmission théorique comprend l'incrémentation du temps de transmission théorique d'une valeur équivalente au produit de la valeur maximale fixée et de l'inverse d'un poids associé à une liaison logique, et l'étape de la mise à jour de la valeur d'intervalle de temps nécessaire comprend la décrémentation de la valeur d'intervalle de temps nécessaire de la valeur maximale fixée ;

si la valeur d'intervalle de temps nécessaire n'est pas supérieure à une valeur maximale fixée, l'étape de l'octroi d'un nombre d'intervalles de temps comprend l'incrémentation de la valeur d'intervalle de temps octroyé actuelle de la valeur d'intervalle de temps nécessaire, l'étape de la mise à jour du temps de transmission théorique comprend l'incrémentation du temps de transmission théorique d'une valeur équivalente au produit de la valeur d'intervalle de temps nécessaire et de l'inverse d'un poids associé à une liaison logique et l'étape de la mise à jour de la valeur d'intervalle de temps nécessaire comprend la mise à zéro de la valeur d'intervalle de temps nécessaire.

3. Procédé selon la revendication 2, dans lequel une valeur maximale indépendamment fixée est associée à chaque liaison logique.

4. Procédé selon l'une quelconque des revendications précédentes, dans lequel l'étape de l'octroi d'un nombre d'intervalles de temps dans le cycle de planification suivant à la liaison logique associée à la feuille racine de la deuxième arborescence binaire est uniquement effectuée si le nombre de liaisons logiques différentes planifiées dans le cycle suivant est inférieur à un nombre maximal ciblé de liaisons logiques différentes, et avant l'étape du tri des première et deuxième arborescences binaires, le procédé comprend en outre l'étape de :

l'incrémentation de 1 du nombre de liaisons logiques différentes planifiées dans le cycle suivant si la liaison logique n'est pas planifiée.

5. Procédé selon la revendication 4, dans lequel si la deuxième arborescence binaire est vide et le nombre de liaisons logiques différentes planifiées dans le cycle suivant atteint le nombre maximal ciblé de liaisons logiques différentes, le nombre maximal ciblé de liaisons logiques différentes est incrémenté d'une valeur égale à un nombre maximal initial prédéterminé de liaisons logiques différentes dans un cycle donné multiplié par la proportion du nombre d'intervalles de temps non planifiés restants dans le tour de planification suivant par rapport au nombre total d'intervalles de temps dans le tour de planification suivant.

6. Procédé selon l'une quelconque des revendications précédentes, dans lequel, à la réception du message REPORT, l'étape de la mise à jour du temps de transmission théorique de la liaison logique inactive comprend en outre :

le réglage du temps de transmission théorique à la plus grande valeur entre la valeur du temps de transmission théorique actuel de la liaison logique et le plus petit temps de transmission théorique de toute liaison logique active, s'il existe d'autres liaisons logiques actives ; et

le réglage du temps de transmission théorique à la plus grande valeur entre la valeur du temps de transmission théorique actuel de la liaison logique et le temps de transmission le plus récent de toute liaison logique, s'il n'existe pas d'autre liaison logique active.

7. Procédé selon l'une quelconque des revendications précédentes, dans lequel chaque répétition des étapes de l'octroi, de la mise à jour et du tri est séparée par un intervalle au cours d'un cycle de planification.

8. Procédé selon la revendication 7, dans lequel l'intervalle entre chaque répétition est égal au temps nécessaire pour transmettre le nombre d'intervalles de temps qui a été ajouté à la valeur d'intervalle de temps octroyé au cours de l'étape précédente de la mise à jour de la valeur d'intervalle de temps octroyé.

9. Procédé selon l'une quelconque des revendications 1 à 6, dans lequel les répétitions des étapes de l'octroi, de la mise à jour et du tri sont effectuées sans interruption à la fin du cycle de planification.

10. Procédé selon l'une quelconque des revendications précédentes, dans lequel chaque liaison logique comprend un contexte de mémoire qui inclut l'identification de liaison logique associée, la valeur d'intervalle de temps nécessaire associée, la valeur d'intervalle de temps octroyé associée et la valeur de temps de transmission théorique associée.

11. Procédé selon l'une quelconque des revendications précédentes, dans lequel le temps de transmission théorique est codé dans les bits les plus significatifs des feuilles des première et deuxième arborescences binaires.

12. Procédé selon l'une quelconque des revendications précédentes, dans lequel l'étape du tri de la première arborescence binaire et de la deuxième arborescence binaire est effectuée en utilisant une comparaison signée des valeurs de temps de transmission théorique.

13. Procédé selon la revendication 12, dans lequel le procédé comprend en outre l'étape :

du réglage périodique du temps de transmission théorique de toutes les liaisons logiques inactives à la valeur de temps de transmission théorique de la liaison logique active avec la valeur de temps de transmission théorique minimale.

14. Terminal de ligne optique de réseau optique passif Ethernet (1) agencé pour exécuter les étapes de procédé selon l'une quelconque des revendications précédentes.

15. Produit de programme informatique pour un dispositif de traitement de données, le produit de programme informatique comprenant un ensemble d'instructions qui, lorsqu'il est chargé dans le dispositif de traitement de données, amène le dispositif à effectuer les étapes du procédé selon les revendications 1 à 13.

FIG. 1

**FIG. 2**

```
                    ┌──────────┐
                    │  START   │
                    └────┬─────┘
                         │
          ┌──────────────▼──────────────┐
          │ Receive REPORT message      │──── S201
          │ from LL_i containing         │
          │ current M_i                  │
          └──────────────┬──────────────┘
                         │
                    ◇ S202 ◇
          ┌──────────────────────────────┐
          │ Is LL_i inactive ?            │───── NO ──┐
          │ (Req_{TQ,i} = 0)              │           │
          └──────────────┬───────────────┘           │
                      YES │                            │
          ┌───────────────▼──────┐                     │
          │ Generate new         │──── S203            │
          │ leaf for LL_i         │                     │
          └───────────────┬──────┘                     │
                          │                             │
                     ◇ S204 ◇                           │
    ┌──── NO ──────────────────────────── YES ────┐    │
    │         │ Gr_{TQ,i} > 0                  │       │    │
    │         │ AND secondary tree             │       │    │
    │ S205    │ not full                       │ S206  │    │
    ▼         └────────────────────────────────┘    ▼    │
┌──────────┐                              ┌──────────────┐ │
│ Add leaf │                              │ Add leaf to  │ │
│ to       │                              │ secondary    │ │
│ primary  │                              │ tree         │ │
│ tree     │                              └──────┬───────┘ │
└────┬─────┘                                     │         │
     └──────────────┬───────────────────────────┘         │
                    │                                       │
               ◇ S207 ◇                                     │
    ┌── YES ──────────────────────── NO ──┐                │
    │        │ At Least                │      │                │
    │        │ one other LL_j is       │      │                │
    │ S208   │ active ?                │ S209 │                │
    ▼        └─────────────────────────┘    ▼                │
```

| S208 | S209 |
|------|------|
| $TTT_i$ updated to largest value of the current $TTT_i$ of the $LL_i$ and the smallest $TTT_j$ of any active $LL_j$ $(TTT_i = \max(TTT_i, \min_j(TTT_j)))$ | $TTT_i$ is updated to the largest value of the current $TTT_i$ and the most recent transmission time of any $LL_j$ $(TTT_i = \max(TTT_i, TTT^{-1}))$ |

$$Req_{TQ,i} = M_i - Gr_{i,k} \qquad \text{S210}$$

```
                    ┌──────────┐
                    │   END    │
                    └──────────┘
```

A

S301

YES    $Req_{TQ,i} > S_G$    NO

S303

$$TTT_i = TTT_i + S_G * T_i$$
$$Gr_{TQ,i} = Gr_{TQ,i} + S_G$$
$$Req_{TQ,i} = Req_{TQ,i} - S_G$$

S302

$$TTT_i = TTT_i + Req_{TQ,i} * T_i$$
$$Gr_{TQ,i} = Gr_{TQ,i} + Req_{TQ,i}$$
$$Req_{TQ,i} = 0$$

END

## FIG. 3

**FIG. 4**

FIG. 5

FIG. 6

0x4000 0000

$x_1$

A

$A < x_1$

0x0

0xffff ffff

0x7fff ffff

0x8000 0000

$A > x_0$

$x_0$

0xc000 0000

Min$_{nb}$(TTTi)

Max(TTTi)

Min(TTTi)

Min(TTTi) > TTTi

0x0

0xffff ffff

0x7fff ffff

0x8000 0000

Min(TTTi)

0xc000 0000

FIG. 7

**FIG. 8**

**FIG. 9**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1796313 A

- EP 11305131 A

**Non-patent literature cited in the description**

- **G. KRAMMER.** *Ethernet Passive Optical Networks,* 2005, ISBN 0-07-144562-5